**Europäisches Patentamt**

**European Patent Office**

**Office européen des brevets**

(19)

(11) Veröffentlichungsnummer: **0 079 414**
A1

(12) # EUROPÄISCHE PATENTANMELDUNG

(21) Anmeldenummer: **81810457.2**

(51) Int. Cl.³: **E 04 B 1/78**

(22) Anmeldetag: **17.11.81**

(43) Veröffentlichungstag der Anmeldung:
**25.05.83** Patentblatt **83/21**

(84) Benannte Vertragsstaaten:
**BE CH DE FR GB LI NL SE**

(71) Anmelder: **Sovilla, Heinz**
**2, Terrailles**
**CH-1304 Cossonay(CH)**

(72) Erfinder: **Sovilla, Heinz**
**2, Terrailles**
**CH-1304 Cossonay(CH)**

(54) **Mehrschichtiges Wärmedämmaterial.**

(57) Das Dämmaterial hat wenigstens eine Lage aus einer glatten Papier- oder Kunststoffbahn (1), die auf ihrer einen Seite mit einem dünnen Metallfilm (2) von 1 bis 20 Mikron Stärke versehen ist, und wenigstens eine Lage aus Wellpappe (3), die nur mit den Spitzen ihrer Wellenberge an der Metallschicht (2) der ersten Lage angeklebt ist und auf der dieser abgewandten Seite ebenfalls einen dünnen Metallfilm (4) trägt. Auf diese Weise steht praktisch der gesamte Bereich beider Metallschichten (2,4) mit den durch die Wellungen der Wallpappe (3) gebildeten Hohlräumen (8) in Berührung, welche eine Dicke von mindestens 1 bis 1,5 mm haben. Diese Massnahme und eine Anordnung der Materiallagen derart, dass ihre Metallschichten (2,4) in diejenige Richtung weisen, in welcher der Wärmefluss gedämmt werden soll, ergeben ein ausserordentlich hohes Dämmvermögen.

Fig. 2

EP 0 079 414 A1

## Mehrschichtiges Wärmedämmaterial

Die Erfindung bezieht sich auf ein mehrschichtiges Wärmedämmaterial, welches eine Vielzahl von Hohlräumen einschliesst
und Lagen aus nichtmetallischem Trägermaterial mit darauf
aufgebrachten Metallschichten aufweist.

Im Unterschied zu einem konventionellen Wärmedämmaterial,
dessen wärmeisolierender Effekt praktisch ausschliesslich auf
der Wärmeabsorption beruht, ist es bei den Metallschichten
aufweisenden Wärmedämmstoffen vor allem die Reflexion der
Wärmestrahlung, die den Isolationseffekt bewirkt. So ist zum
Beispiel ein symmetrisch aufgebautes flexibles Material aus
zwei glatten Kunststofflagen und einer dazwischenliegenden
Trennschicht in Form eines wabenförmig gestalteten Schaumstoffs bekannt (US-PS 4 136 222), wobei die gegenüberliegenden
Innenflächen der äusseren Kunststofflagen mit einer spiegelnden Reflexionsschicht versehen sind.

Ein bekanntes mehrschichtiges Bauelement (DE-PS 835 522)
besteht aus einer Vielzahl von aufeinandergeschichteten gewellten Kunststoffolien, von denen die beiden äusseren auf
ihrer Aussenseite mit einem metallischen Ueberzug versehen
sind.

Nun haben jedoch vom Anmelder durchgeführte systematische
Messungen an unterschiedlichen Kombinationen und Konfigurationen von Wärmedämmaterialien mit einer oder mehreren
Metallschichten gezeigt, dass die Wärmedurchlässigkeit bei
allen denjenigen Untersuchungsproben verhältnismässig gross
war, bei denen die Metallschicht bzw. Metallschichten auf die
Wärmequelle gerichtet oder mit einem anderen Material unmittelbar bedeckt waren, dass jedoch bei einer ganz bestimmten Anordnung der Metallschichten überraschenderweise eine Verringerung der Wärmedurchlässigkeit um 30 bis 100% erreicht wurde, verglichen mit üblichen Anordnungen der sonst gleichen Materialkombination.

Der Erfindung liegt die Aufgabe zugrunde, ein Wärmedämmaterial der eingangs beschriebenen Art so zu gestalten, dass sein Wärmedämmvermögen bei gegebenem Material, gegebener Masse bzw. gegebenem Gewicht sowie gegebener Zahl und Dicke der Lagen optimal ausnutzbar ist und insbesondere in der einen Richtung wirksamer ist als in der entgegengesetzten Richtung.

Diese Aufgabe wird erfindungsgemäss dadurch gelöst, dass die Metallschichten einseitig jeweils auf den in die gleiche Richtung weisenden Seiten der Lagen des Trägermaterials aufgebracht sind, direkt einen Teil der Begrenzungswand der Hohlräume bilden und durch diese vor einer flächenhaften Berührung mit der Nachbarlage geschützt sind und dass die erwähnte Richtung, in welche die mit der Metallschicht versehenen Seiten der Lagen weisen, diejenige Richtung definiert, in welcher der Wärmefluss bevorzugt gedämmt werden soll.

Wenn also das hinsichtlich der Metallschichten asymmetrisch ausgebildete, erfindungsgemässe Wärmedämmaterial so orientiert wird, dass sich die Metallschichten auf den der Wärmequelle abgewandten Seiten der Materiallagen befinden, dann ist überraschenderweise der Wärmeisolationseffekt wesentlich grösser als bei der umgekehrten Orientierung des gleichen Wärmedämmaterials oder als bei einem Material der gleichen Beschaffenheit und Lagenzahl, in welchem jedoch die Metallschichten unmittelbar mit einem anderen Material bedeckt sind und daher nicht mit der Luft in den Hohlräumen in Berührung stehen. Desweiteren hat sich gezeigt, dass zusätzliche, auch noch auf den anderen, der Wärmequelle zugewandten Seiten der Materiallagen angebrachte Metallschichten erstaunlicherweise praktisch keinen zusätzlichen Wärmedämmeffekt bringen, so dass diese Metallschichten auf den anderen Lagenseiten ohne weiteres eingespart werden können.

Die erstmals vom Anmelder erkannte Richtungsabhängigkeit der Wärmedämmung, welche in der umfangreichen Literatur über Wärmedämmstoffe nirgendwo erwähnt und bisher nach Kenntnis des Anmelders noch niemals ausgenutzt wurde, kann sehr vorteilhaft sein, wenn erfindungsgemässe Wärmedämmplatten als Wandelemente für Häuser verwendet werden: In heissen südlichen Ländern ist es günstig, wenn der Wärmefluss von innen nach aussen grösser ist als umgekehrt, damit tagsüber die Aussenhitze möglichst nicht in das Haus eindringen, während der kühlen Nacht jedoch die Räume möglichst abkühlen können. Der umgekehrte Effekt, der bei umgekehrter Installation einer Wärmedämmplatte nach der Erfindung eintritt, ist in kalten Regionen wünschenswert, wo ein Wärmeabfluss aus dem Hausinneren verhindert werden soll, ausgenommen bei Sonneneinstrahlung, wo ein Wärmefluss von der aufgewärmten Aussenfläche des Hauses ins Hausinnere günstig ist.

Bevorzugte Ausgestaltungen der Erfindung, die vor allem als wärmedämmende Bau- und Wandelemente dienen, sind in den Patentansprüchen 2, 3 und 4, weitere zweckmässige Ausgestaltungen in den übrigen Patentansprüchen angegeben.

Die Erfindung wird anhand der Zeichnungen näher erläutert. Es zeigen:

Figur 1     ein Diagramm, welches die Ergebnisse prinzipieller Versuche veranschaulicht,

Figur 2     eine einfache Grundstruktur eines Wärmedämmaterials im Querschnitt,

Figur 3    die Teildarstellung eines eine Vielzahl von Grundstrukturen nach Figur 2 aufweisenden Bau- oder Wandelements, im Querschnitt,

Figuren 4
bis 6      verschiedene weitere Ausführungsformen im Querschnitt,

Figur 7
und 8      eine erfindungsgemäss modifizierte Noppenfolie im Querschnitt und in der Draufsicht und

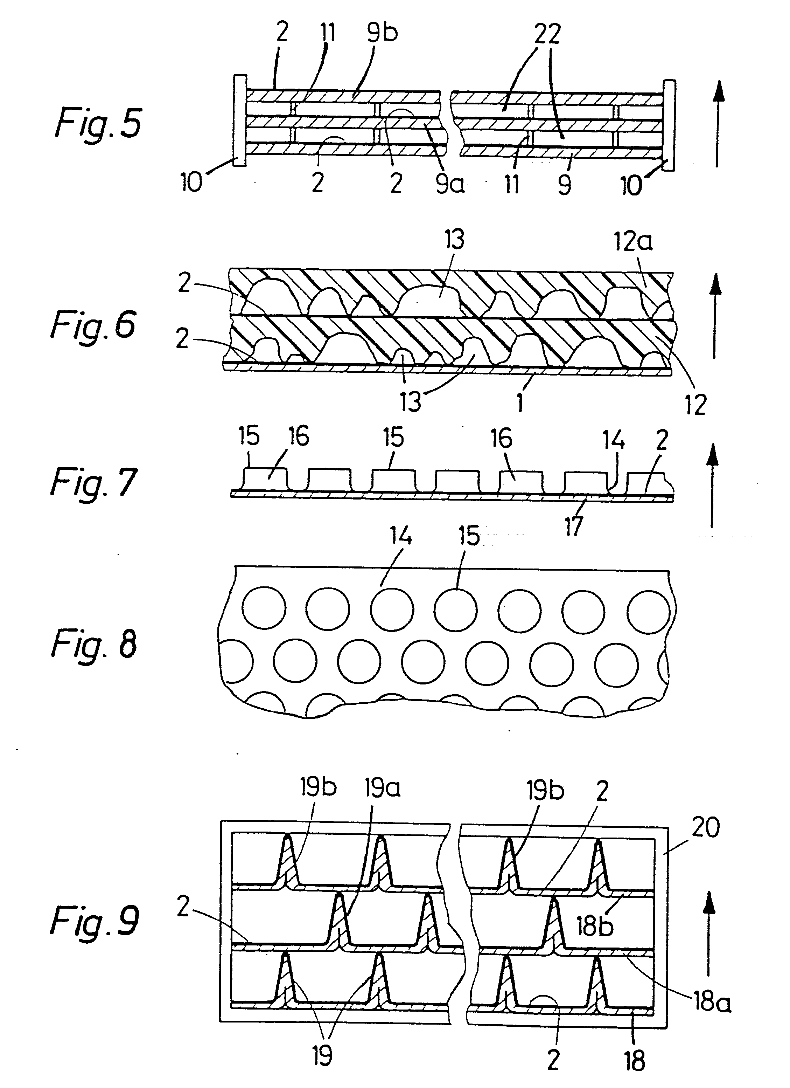

Figur 9    eine weitere Ausführungsform im Querschnitt.

Die gezeigten Ausführungsformen sind im allgemeinen in vergrössertem Massstab und bezüglich der Dicke der Materiallagen und Metallschichten nicht massstabsgerecht dargestellt.

Die grundlegenden Versuche, die auf die vorliegende Erfindung führten, bestanden darin, einen frei aufgehängten zylindrischen Metallbehälter, der mit einem bestimmten Wärmedämmaterial umgeben war, mit $90^{\circ}$ heissem Wasser zu füllen und die Zeit der Abkühlung bis auf $60^{\circ}$C zu messen. Der Behälter hatte einen Durchmesser von etwa 8 cm und eine Höhe von etwa 15 cm.

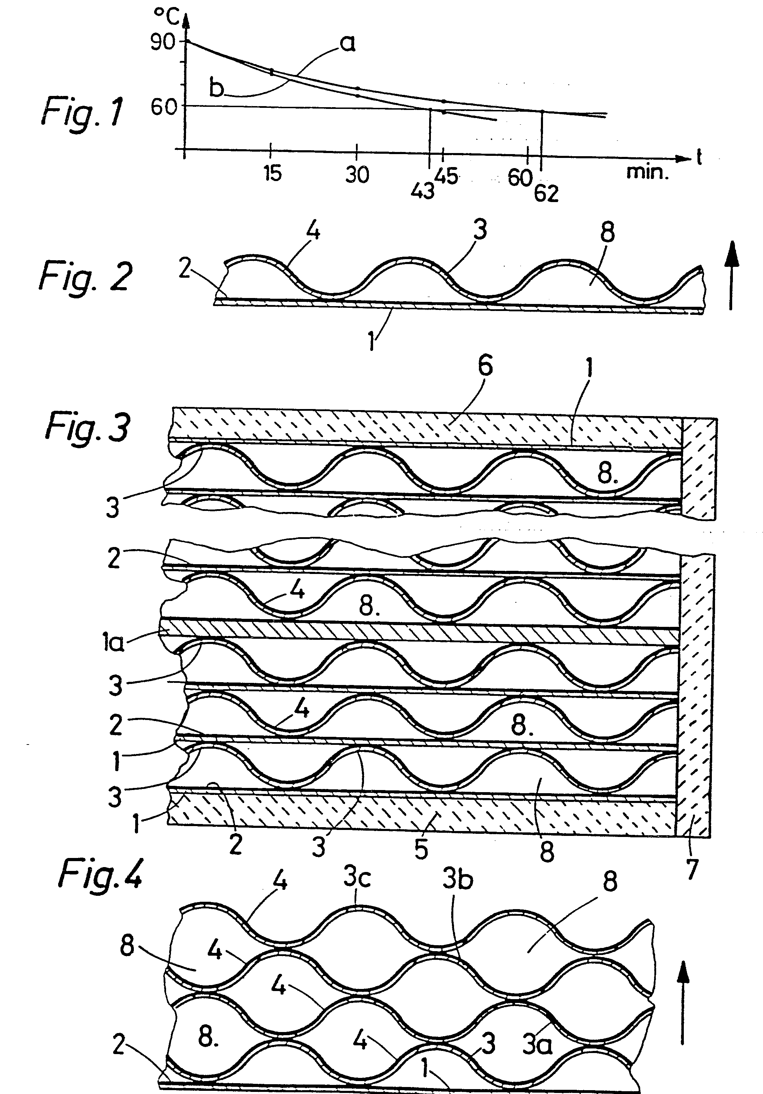

Das Diagramm nach Figur 1, in welchem auf der Ordinate die Temperatur T in Celsius-Graden und auf der Abszisse die Zeit t in Minuten angegeben sind, zeigt zwei typische Abkühlungskurven für den Fall einer einseitig metallisierten, unter dem Handelsnamen Mylar bekannten Folie aus Terephthalsäure-Aethylenglykol-Polyester von insgesamt 12 Mikron Dicke, wobei der aus Aluminium bestehende Metallfilm nur etwa 2 bis 4 Mikron stark war. Wenn die Folie mit ihrer metallisierten Seite auf dem Behälter anlag, ergab sich eine Abkühlzeit von 43 Minuten (Kurve b). Dagegen beträgt die Abkühlzeit 62 Mi-

nuten, wenn die metallisierte Folienseite nach aussen wies,
also mit der Umgebungsluft in Berührung stand (Kurve a).

Dieser Effekt, der sich bei zwei und mehr Lagen eines erfindungsgemäss zusammengesetzten Wärmedämmaterials entsprechend
steigern lässt, wurde für die verschiedensten Materialkombinationen durch die Versuche bestätigt. Im Falle einer Materialkombination aus einer ersten, am Behälterumfang anliegenden inneren Mylarfolie, die auf ihrer nach aussen weisenden
Seite metallisiert war, einer diese Mylarfolie im Abstand von
etwa 3 mm umgebenden PVC-Folie sowie einer auf dieser anliegenden zweiten äusseren Mylarfolie mit metallisierter Aussenseite, ergab sich eine Abkühlzeit von 93 Minuten. Hierbei
wurde der Hohlraum zwischen der inneren Mylarfolie und der
PVC-Folie durch Abstandshalter realisiert. Der überraschend
vorteilhafte Isolationseffekt wurde jedoch sprunghaft verringert, als bei der vorstehend beschriebenen Materialkombination die zweite Mylarfolie auf die Innenseite der PVC-Folie
verlegt und umgedreht wurde, so dass ihre Metallschicht dem
Hohlraum und dem Behälter zugekehrt war. Die Abkühlzeit sank
hierbei auf weniger als 65 Minuten. Andererseits brachte die
Anbringung von Mylarfolien sowohl auf der Aussenseite als auch
auf der Innenseite der PVC-Folie, wobei die Metallschicht der
Aussenseite bzw. dem Hohlraum zugekehrt war, praktisch keinen
Vorteil gegenüber der Anordnung, bei der nur die Aussenseite
der PVC-Folie mit einer Mylarfolie versehen war. Das zeigt,
dass es nicht nur darauf ankommt, dass die Metallschichten an
Luft grenzen, also Berührungen mit der Nachbarlage vermieden
werden müssen, sondern dass die Position der Metallschichten
auf der der Wärmequelle abgewandten Seite der Materiallagen
wesentlich ist. Auch andere Versuche, bei denen ebene Proben
von konventionellen und erfindungsgemässen Wärmedämmaterialien
durch Wärmeflussmessungen untersucht wurden, bestätigten die
erfindungsgemässen Effekte.

Die Versuche deuten ferner daraufhin, dass die Metallschicht hinreichend dünn sein muss und ihre Stärke nicht mehr als etwa 20 Mikron, vorzugsweise nur 1 bis etwa 10 Mikron, betragen sollte, um eine störende Wärmeableitung zu unterdrücken. Daher sind Wärmedämmaterialien nach der Erfindung vorzugsweise mit metallisierten Mylarfolien, deren Metallfilm nur 1 bis 4 Mikron stark ist und deren Gesamtdicke 8 bis 12 Mikron betragen kann, mit handelsüblichen Aluminiumfolien von etwa 8 bis 12 Mikron Stärke auf einer Trägerfolie aus Papier oder dergleichen oder mit auf Trägermaterial aufgebrachten Metallfilmen versehen. Das bringt den zusätzlichen Vorteil, dass das Gewicht ausserordentlich gering gehalten werden kann. Die Hohlräume bzw. Luftpolster sollten im Durchschnitt grössenordnungsmässig mindestens 1 mm, vorzugsweise 1,5 mm dick sein.

In den Figuren 2 bis 9 gibt der nach oben weisende Pfeil jeweils diejenige Richtung an, in welcher der Wärmefluss bevorzugt gedämmt werden soll. Die Wärmequelle bzw. der gegen Wärmeverlust zu isolierende Raum oder Gegenstand befindet sich also stets unterhalb des gezeigten Dämmaterials. Für den Fall, dass ein Raum oder Gegenstand bevorzugt gegen das Eindringen von Wärme zu schützen ist, muss er oberhalb des gezeigten Dämmaterials liegen.

Figur 2 zeigt eine einfache Grundstruktur des Wärmedämmaterials, welches aus einer glatten Materialbahn 1 mit einer einseitig aufgebrachten dünnen Metallschicht 2 und aus einer daran anliegenden Wellbahn 3 besteht, die auf ihrer der Materialbahn 1 abgewandten Seite ebenfalls mit einer dünnen Metallschicht 4 versehen und nur mit den Spitzen ihrer Wellenberge an der metallisierten Seite der Materialbahn 1 angeklebt ist. Der gesamte übrige Bereich der Metallschicht 2 ist frei von Klebstoff und steht direkt mit den Luftpolstern der Hohlräume 8 in den Wellungen der Wellbahn 3 in Berührung. Ebenso grenzt die Metallschicht 4 an Luft. Die Verklebung bereitet keine Schwierigkeiten, weil Maschinen bekannt sind, die nach der Formung der Wellbahn 3 Klebstoff nur auf die Spitzen der Wellenberge dieser Wellbahn auftragen und diese dann mit der Materialbahn 1 zwecks Verklebung in Kontakt bringen.

Die Materialbahn 1 und die Wellbahn 3 bestehen vorzugsweise aus Papier oder Pappe mit einer Dicke von beispielsweise 0,2 bis 0,5 mm. Die Metallschichten 2 und 4 sollen maximal 20 Mikron nicht übersteigen und bestehen zum Beispiel aus direkt aufgeklebten Aluminiumfolien, deren Stärke vorzugsweise 8 bis 12 Mikron beträgt, oder aus metallisierten Mylarfolien mit einer Gesamtdicke von vorzugsweise 8 bis 12 Mikron, deren nur 1 bis 3 Mikron starker Metallfilm der Wellbahn 3 zugekehrt ist. Die Wellbahn 3 kann insgesamt, unter Berücksichtigung der Wellungen, etwa 1,5 bis 5 mm stark sein, so dass hinreichend grosse Hohlräume 8 bzw. Luftpolster gebildet werden, die im Mittel grössenordnungsmässig wenigstens 1 mm dick sind. Die Gesamtdicke einer Grundstruktur nach Figur 2 beträgt dann ungefähr 2 bis 5 mm.

Gegebenenfalls kann die Metallschicht 2 auf der glatten Materialbahn 1 dicker sein als die auf der Wellbahn 3 aufgebrachte Metallschicht 4, die zwecks Erzielung eines möglichst guten Wärmedämmeffekts nur ein oder wenige Mikron stark sein sollte.

Figur 3 zeigt ein plattenförmiges Bau- oder Wandelement, wie es für den Häuserbau verwendet werden kann. Es besteht aus einer Vielzahl übereinander geschichteter Grundstrukturen nach Figur 2, also aus einer Vielzahl von Wellbahnen 3 aus Pappe mit jeweils dazwischen liegenden, ebenfalls aus Pappe bestehenden glatten Materialbahnen 1. Die in Pfeilrichtung weisenden Seiten der Materialbahnen 1 und Wellbahnen 3 sind mit Metallschichten 2 bzw. 4 versehen. Die äusseren Elemente auf den beiden Breitseiten bestehen aus stabilen Platten 5 und 6, vorzugsweise aus Asbestzement, die mit den äusseren glatten Materialbahnen 1 verklebt sind, und die Schmalseiten können durch ähnliche Platten oder Schichten verstärkt sein, von denen in Figur 3 eine Platte 7 gezeigt ist.

Ein typisches Wandelement nach Figur 3 hat eine Fläche von 1,8 x 4,8 m$^2$ und eine Dicke von etwa 6 cm, und besteht aus insgesamt je 12 Materialbahnen 1 und Wellbahnen 3 sowie äusseren Asbestzementplatten von je 5 mm Dicke. Die einzelnen Lagen werden vorzugsweise aus unbrennbarer Pappe gebildet, die eine Dicke von etwa 0,2 bis 0,4 mm hat, ausgenommen die nach jeweils drei Wellbahnen 3 eingefügten glatten Materialbahnen 1a, die vorzugsweise 2,5 bis 3 mm stark sind. Die Dicke der aus Aluminium bestehenden Metallschichten 2 und 4 beträgt etwa 4 Mikron, jedoch kann die auf den glatten Materialbahnen 1 befindliche Metallschicht 2 auch stärker sein.

Ein derartiges Wandelement ist billig, einfach herzustellen und praktisch zu handhaben, da es ein nur sehr geringes Gewicht hat. Die Stabilität erfüllt die praktischen Anforderungen. Der Wärmedämmeffekt ist, bezogen auf die Pfeilrichtung in Figur 3, trotz des einfachen und preiswerten Aufbaus ausserordentlich hoch, da praktisch die gesamte Fläche aller Metallschichten 2 und 4 direkt mit den Luftpolstern in Hohlräumen 8 in Berührung steht und daher optimal zur Wärmedämmung ausgenutzt wird.

Nach Figur 4 sind auf der mit einer Metallschicht 2 versehenen Seite einer glatten Materialbahn 1 vier Lagen von Wellbahnen 3, 3a, 3b und 3c angeordnet, die auf ihren der Materialbahn 1 abgewandten Seiten je eine Metallschicht 4 tragen. Benachbarte Wellbahnen sind um eine halbe Wellenlänge ihrer Wellung zueinander versetzt und an den Spitzen ihrer aneinanderliegenden Wellenberge miteinander verklebt, während die Wellbahn 3 mit ihren Wellenbergen an der Metallschicht 2 der Materialbahn 1 angeklebt ist. Alle Lagen sind optimal im Sinne der Erfindung ausgenutzt, da praktisch die gesamten Bereiche aller Metallschichten 2 und 4 unmittelbar an Hohlräume 8 grenzen.

Nach Figur 5 sind drei ebene Materialbahnen 9, 9a und 9b parallel zueinander im Abstand von beispielsweise je 1 bis 2 mm in einem Rahmen 10 verspannt und auf jeweils der gleichen Seite mit einer Metallschicht 2 versehen. Abstandshalter 11, beispielsweise in Form kleiner Stäbchen, sichern einen ungefähr konstanten Abstand und damit die erforderlichen Luftschichten 22 zwischen den einzelnen Lagen.

Im Beispiel nach Figur 6 besteht das Wärmedämmaterial aus einer mit einer Metallschicht 2 versehenen Materialbahn 1 und zwei auf dieser und untereinander durch Kleben befestigten Lagen 12 und 12a aus Schaumstoff mit eingeformten, Hohlräume 13 bildenden Vertiefungen bzw. mit offenen Zellen. Die der Materialbahn 1 abgewandte Seite der Schaumstofflage 12 trägt ebenfalls eine Metallschicht 2. Die Vertiefungen lassen sich im warmen Zustand des Schaumstoffs, der vorzugsweise aus Polystyrol bestehen kann, mit einer entsprechenden Profilwalze oder Profilplatte leicht einpressen und können eine beliebige Gestalt, zum Beispiel eine Wabenform, haben. Im betrachteten Beispiel ist angenommen, dass die Hohlräume 13 nur auf der Seite der Schaumstofflagen münden, welche von der Metallschicht 2 der benachbarten Lage begrenzt wird.

Im Beispiel nach den Figuren 7 und 8 besteht das Wärmedämmaterial aus einer Noppenfolie mit Noppen 15, die geschlossene Lufttaschen bzw. Hohlräume 16 bilden. Die Noppenfolie ist aus einer Folienbahn 14, die durch Tiefziehen unter Bildung der Noppen 15 verformt wurde, und einer damit verklebten oder verschweissten, metallisierten Folienbahn 17 zusammengesetzt, deren Metallfilm 2 sich auf der der verformten Folienbahn 14 zugewandten Seite befindet und damit direkt eine ebene Begrenzungswand für die Lufttaschen 16 bildet. Bei bisher bekannten Noppenfolien stehen die Lufttaschen nicht mit einem Metallfilm in Berührung, so dass der Wärmedämmeffekt wesentlich schlechter ist als bei einer Noppenfolie nach der Erfindung, die beispielsweise nach bekannten Verfahren aus Polyäthylen herstellbar ist und eine im wesentlichen durch die Dicke der Lufttaschen 16 bestimmte Gesamtstärke von etwa 2 bis 4 mm haben kann; die Stärke der metallisierten Folien selber beträgt zum Beispiel nur 8 bis 20 Mikron. Es können zwei oder mehr Lagen aus derartigen Noppenfolien, gegebenenfalls unter Einfügung weiterer Isolierschichten, entweder lose übereinandergestapelt und durch einen Rahmen zusammengehalten oder aber miteinander verklebt werden, wobei die durch die Noppen 15 gebildeten Luftpolster 16, wie die Draufsicht nach Figur 9 zeigt, jeweils mit dem weitaus grössten Bereich jeder Metallschicht 2 direkt in Berührung stehen. Prinzipiell ist es auch möglich, einen Metallfilm auf die Innenseite, also die die konkaven Seiten der Noppen 15 aufweisende Seite der verformten Folie 14 aufzubringen. In diesem Falle muss natürlich das Dämmaterial, verglichen mit dem Beispiel nach Figur 8, in umgekehrter Orientierung installiert werden, damit die Metallschichten in die richtige Richtung weisen.

Im Beispiel nach Figur 9 sind als Dämmaterial Kunststoffolien 18, 18a und 18b vorgesehen, welche mit rippen- oder stachelförmigen Vorsprüngen 19, 19a und 19b versehen sind und zu diesem Zwecke bei ihrer Herstellung im warmen Zustand entsprechend verformt wurden, beispielsweise mit Hilfe von Rippen- bzw. Stachelwalzen oder mit entsprechenden Profilen versehenen Platten. Zur Fertigung derartiger verformter Folien eignen sich beispielsweise PVC-Folien mit einer Stärke von zum Beispiel ungefähr 100 Mikron. Im Beispiel nach Figur 10 sollen die Vorsprünge keine Lufttaschen, sondern lediglich Abstandshalter, vorzugsweise mit einer Länge von 1 bis 1,5 mm, bilden, welche einen entsprechenden Abstand zur benachbarten Lage sichern. Daher können die Vorsprünge so schmal sein, dass ihre Begrenzungswand wenigstens teilweise zu einer kompakten Masse ohne Hohlraum zusammengelaufen bzw. zusammengeklebt ist. Die Folien 18, 18a und 18b sind auf ihren die Vorsprünge aufweisenden Seiten mit einer Metallschicht 2 versehen, liegen lose aufeinander und werden durch einen Rahmen 20 zusammengehalten. Die Metallschicht könnte natürlich auch auf der anderen Seite der Folien aufgebracht sein, die dann relativ zur Wärmequelle in umgekehrter Orientierung zu installieren wären.

Die Erfindung ist nicht auf die beschriebenen Ausführungsbeispiele beschränkt, sondern schliesst die unterschiedlichsten Konfigurationen, Kombinationen und Materialien ein, bei denen das Dämmaterial irgendwelche Hohlräume aufweist, die einseitig von Metallschichten begrenzt sind. Die Materialbahnen bzw. Wellbahnen können aus jedem geeigneten Material bestehen, insbesondere aus Papier, Pappe, Karton, Kunststoff oder Glasfasermaterial. Ferner kann jede beliebige Anzahl von Materiallagen vorgesehen sein, je nach dem gewünschten Wirkungsgrad der Wärmedämmung. Ein Dämmaterial, das beispielsweise aus sechs Lagen der in Figur 2 oder 4 gezeigten Ausführungsform besteht, liefert, wie Versuche zeigten, eine mit einer üblichen Thermosflasche vergleichbare Isolierung. Die Anwendung des Dämmaterials nach der Erfindung schliesst auch die Kälteisolation ein, wobei dann die Metallschichten in Richtung auf das gekühlte Objekt bzw. die kühl zu haltenden Räume weisen müssen.

## PATENTANSPRUECHE

1. Mehrschichtiges Wärmedämmaterial, welches eine Vielzahl von Hohlräumen einschliesst, gekennzeichnet dadurch, dass das Trennmaterial welches mit seiner Aussenhaut direkt einen Teil der Begrenzungswände der Hohlräume bildet, vorzüglicherweise aus zwei verschiedenen rückseitig miteinander vollverbundenen Materialien besteht, und dass in einer Wärmeflussrichtung hin die erwähnte Aussenhaut der Hohlräume gegenüber der erwähnten Aussenhaut in der entgegengesetzten Wärmeflussrichtung hin einen diametral entgegengesetzten Wärmeemissionskoeffizienten besitzt und wobei die Wandoberflächen mit dem gleichen Wärmeemissionskoeffizienten jeweils in die gleiche Richtung weisen, so dass in einer Wärmeflussrichtung hin die Wärmeemission stehts den grösst möglichen Wärmeflusswiderstand und in der entgegengesetzten Wärmeflussrichtung hin die Wärmeemission den kleinstmöglichsten Wärmeflusswiderstand erfährt.

2. Mehrschichtiges Wärmedämmaterial, welches eine Vielzahl von Hohlräumen einschliesst und Lagen aus nichtmetallischem Trägermaterial mit darauf aufgebrachten Metallschichten aufweist, dadurch gekennzeichnet, dass die Metallschichten (2,4) einseitig jeweils auf den in die gleiche Richtung weisenden Seiten der Lagen des Trägermaterials (1,3;9;17;18) aufgebracht sind, direkt einen Teil der Begrenzungswand der Hohlräume (8;13;16;22) bilden und durch diese vor einer flächenhaften Berührung mit der Nachbarlage geschützt sind und dass die erwähnte Richtung, in welche die mit der Metallschicht versehenen Seiten der Lagen weisen, diejenige Richtung definiert, in welcher der Wärmefluss bevorzugt gedämmt werden soll.

3. Wärmedämmaterial nach Anspruch 2, dadurch gekennzeichnet, dass es mehrere Lagen aus Wellbahnen (3), insbesondere aus Wellpappe oder Wellpapier, und zwischen benachbarten Wellbahnen je eine Lage aus einer glatten Materialbahn (1), insbesondere aus Pappe, aufweist, an welcher beidseitig die Spitzen der Wellenberge bzw. Wellentäler der benachbarten

Wellbahnen anliegen bzw. angeklebt sind, und dass wenigstens die Wellbahnen (3) mit der Metallschicht (4) versehen sind, die vorzugsweise eine Dicke von 1 bis 10 Mikron hat.

4. Wärmedämmaterial nach Anspruch 3, dadurch gekennzeichnet, dass auch die glatten Materialbahnen (1) mit einer Metallschicht (2) versehen sind, welche dicker sein kann als die auf den Wellbahnen befindliche Metallschicht.

5. Wärmedämmaterial nach Anspruch 3 oder 4, dadurch gekennzeichnet, dass es als vorgefertigtes plattenförmiges Bauelement ausgebildet ist und acht bis zwanzig Lagen aus Wellbahnen (3) und dazwischenliegenden glatten Materialbahnen (1) aufweist, wobei Wellbahnen und glatte Materialbahnen vorzugsweise aus unbrennbarer Pappe bestehen, dass die durch die Wellungen der Wellbahnen (3) gebildeten Hohlräume im Mittel 1 bis 4 mm, vorzugsweise etwa 2 mm, dick sind und dass wenigstens an den äusseren Breitseiten aufgeklebte, stabile Platten, vorzugsweise aus Asbestzement, vorgesehen sind.

6. Wärmedämmaterial nach Anspruch 2, dadurch gekennzeichnet, dass es mehrere Wellbahnen (3,3a,3b,3c) aufweist, von denen benachbarte Wellbahnen jeweils um etwa eine halbe Wellenlänge ihrer Wellung zueinander versetzt und nur an den Spitzen ihrer aneinanderliegenden Wellenberge miteinander verklebt sind.

7. Wärmedämmaterial nach Anspruch 2, dadurch gekennzeichnet, dass es wenigstens eine Lage aus einem Schaumstoff (12,12a) mit auf wenigstens einer Seite eingeformten Vertiefungen (13) bzw. offenen Zellen und mindestens eine diese Vertiefungen (13) bzw. Zellen abdeckende Materialbahn (1) aufweist und dass eine der die Vertiefungen (13) oder Zellen begrenzenden Wände, vorzugsweise die Wand der sie abdeckenden Materialbahn (1) bzw. der benachbarten Lage, mit der Metallschicht (2) versehen ist.

8. Wärmedämmaterial nach Anspruch 2, dadurch gekennzeichnet, dass es wenigstens eine Lage aus einer geschlossene Lufttaschen (16) aufweisenden Noppenfolie mit einer unter Bildung der Noppen (15) verformten Folienbahn (14) und einer damit verklebten oder verschweissten glatten Folienbahn (17) aufweist und eine der die Lufttaschen (16) begrenzenden Wände, insbesondere die Wand der glatten Folienbahn (17), mit der Metallschicht (2) versehen ist.

9. Wärmedämmaterial nach Anspruch 2, dadurch gekennzeichnet, dass wenigstens zwei ebene Materialbahnen (9,9a,9b) parallel zueinander unter Zwischenfügung von Abstandshaltern (11) in einem Rahmen (10) verspannt sind.

10. Wärmedämmaterial nach Anspruch 3, dadurch gekennzeichnet, dass es wenigstens eine Kunststoffolie (18,18a,18b) aufweist, welche unter Bildung von schmalen, rippenförmigen oder stachelförmigen Vorsprüngen (19,19a,19b) verformt und auf einer Seite mit der Metallschicht (2) versehen ist, und dass vorzugsweise mehrere Lagen aus solchen verformten Folien aufeinandergestapelt und in einem Rahmen (20) zusammengehalten sind, wobei die Vorsprünge Abstandshalter bilden.

11. Wärmedämmaterial nach Anspruch 2 oder 3, dadurch gekennzeichnet, dass die Metallschichten (2,4) aus einem Aluminiumfilm mit einer Dicke von 1 bis 15 Mikron bestehen, der auf einer Folie aus Terephthalsäure-Aethylenglykol-Polyester aufgebracht ist, wobei diese Folien auf die erwähnten Lagen (1,3) aufgeklebt sind, und dass die Hohlräume (8;13;16;22) im Mittel grössenordnungsmässig mindestens 1 mm dick sind.

0079414

Fig. 1

Fig. 2

Fig. 3

Fig. 4

0079414

Fig.5

Fig.6

Fig.7

Fig.8

Fig.9

## 0079414

**EUROPÄISCHER RECHERCHENBERICHT**

Nummer der Anmeldung

EP 81 81 0457

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | US-A-3 707 433 (CLOUGH) <br> * Spalte 4, Zeilen 27-72; Abbildung 3 * | 1,2 | E 04 B 1/78 |
| A | US-A-3 806 391 (CLAY) <br><br> * Spalte 2, Zeilen 46-64; Spalte 3, Zeile 33 - Spalte 4, Zeile 9; Abbildung 3 * | 1,2,9, 11 | |
| A | DE-A-1 952 722 (VEROLME) <br> * Seite 1, Absatz 1; Seite 4, Absatz 4; Abbildung 1 * | 1-4 | |
| A | FR-A-2 272 236 (CZERCZUK) <br> * Seite 2, Zeile 23 - Seite 3, Zeile 27; Abbildung 3 * | 1,2,7 | |
| A | AU-A- 475 800 (UNITED PACKAGES) <br> * Seite 3, Absätze 2,5; Seite 5, Absatz 1; Abbildungen 1,2 * | 8 | **RECHERCHIERTE SACHGEBIETE (Int. Cl. ³)** <br><br> E 04 B |

Der vorliegende Recherchenbericht wurde für alle Patentansprüche erstellt.

| Recherchenort | Abschlußdatum der Recherche | Prüfer |
|---|---|---|
| DEN HAAG | 23-07-1982 | CAVALERI S.P. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82